# EUROPEAN PATENT APPLICATION

(11) **EP 2 437 169 A1**
(43) Date of publication of application: **04.04.2012**
(21) Application number: 10176488.4
(22) Date of filing: 13.09.2010
(51) Int. Cl.: G06F 9/50

(54) **Job scheduling timing apparatus and job scheduling timing method**

(71) Applicant: FUJITSU LIMITED, Kawasaki-shi, Kanagawa 211-8588 (JP)
(72) Inventor: Van den Berghe, Christopher Sven, Hayes, Middlesex UB4 8FE (GB)
(74) Representative: Wilding, Frances Ward

(57) **Abstract**

There is provided a method for determining timing of transmittal of a job to a job scheduling apparatus in a data centre, the method comprising receiving a job to be performed in the data centre, obtaining a current value representing the current efficiency of the data centre, assessing whether the current value is an acceptable value for performing the job, repeating the obtaining and assessing until the current value is an acceptable value; and when the current value is an acceptable value, transmitting the job to a job scheduling apparatus.

## Description

This invention is in the field of data centre management and in particular is related to the delivery of tasks to a job scheduler for allocation among the computing resources in the data centre.

Energy cost and associated CO₂ production is a serious cost for data centre operators. There is pressure to reduce the cost of data centre energy while maintaining services provided to data centre users. The cost of data centre energy can be considered in terms of either the monetary value charged by the utility companies or the amount of CO₂ created in the production of the energy used. These costs are dynamic, varying not only between night and day but over a range of timescales. The overall cost to a data centre operator is a function of the external cost, for example cost per unit of energy, and the data centre efficiency, for example the amount of information processed per unit energy consumed. The cost can be reduced either by increasing efficiency or by incurring the charge at a time when the cost is lower.

Data centres use some energy to power the IT equipment; computers, storage and networking equipment. The operation of this equipment produces heat (roughly equivalent to the amount of power provided to the IT equipment as there is no other way to dissipate the used energy) so another major use of data centre power is to remove this heat from the data centre equipment and halls and to expel it to the outside (by using, for example, air conditioners). A third use of power in data centres is the power delivery mechanism that ensures a reliable clean power supply e.g. uninterruptable power supplies. The efficiency of a data centre results from the efficiency of any combination of these constituents and not necessarily just from the efficiency of the IT equipment.

The energy efficiency of data centres is not simply a linear function of the load on the data centre, in fact, the power used by the data centre increases faster than the load placed on the data centre. Causes of the power to load function being other than a linear relationship include fans (used to remove heat by moving air about) whose power draw increases as the cube of rotation speed (while the amount of heat removed is proportional to rotation speed) and the computer chips whose power draw (and heat produced) can be proportional to the cube of their operating frequency. At low data centre loads the data centre energy efficiency will be low due to the constant power draw that is always present - power used by equipment that is turned on but not performing work. As the load rises the constant power draw become relatively less important and the data centre energy efficiency increases. As the data centre load increases further, the nonlinear components become important and the energy efficiency reduces. This means that there is some point in the data centre's load that has the best efficiency and as the load is reduced or increased from this point the efficiency reduces. So, it is desirable to keep the data centre efficiency at or around this optimal value by adding or removing load.

The efficiency of data centres is also affected by external conditions such as temperature and relative humidity. For example, since the thermodynamics of heat transfer mean that it is easier to remove heat when there is a large temperature difference between the data centre and the outside, it requires more energy to cool a data centre when it is hot outside and so the data centre efficiency decreases.

Embodiments of the present invention provide a method for determining timing of transmittal of a job to a job scheduler in a data centre, the method comprising receiving a job to be performed in the data centre, obtaining a current value representing the current efficiency of the data centre, assessing whether the current value is an acceptable value for performing the job, repeating the obtaining and assessing until the current value is an acceptable value, and when the current value is an acceptable value, transmitting the job to the job scheduler.

Execution time of the job can therefore be delayed for efficiency reasons. It may be that there is a period of waiting between an assessment that the current value is not an acceptable value for performing the job and a next iteration of the obtaining and assessing. Advantageously, by delaying jobs so that they are performed at a time when efficiency is high, the overall efficiency of the data centre can be improved. The data centre operator is able to manipulate the load on the data centre by shifting the time that the load is executed. Embodiments of the present invention provide suitable, easy to compute criteria for adding or removing load.
Furthermore, the method according to the present invention is performed in addition to current operating practices as an enhancement, rather than as an alternative requiring reconfiguration and the associated upheaval.

The current value representing the current data centre efficiency can be based on the current load plus the load of the job to be performed, so that it is the load including the job to be performed that is assessed for acceptability.

The current value representing the current efficiency of the data centre may be a score representing a number of factors weighted according to their relative importance. Alternatively, the current value may be a measurement of an external factor such as outside temperature, which is linked to efficiency of the data centre so that it can be said to represent the current efficiency of the data centre. Then the assessment may be made on the basis of a known acceptable temperature range. As a further alternative, the current value may be an indication of whether or not certain apparatus at the data centre are in operation, since this can also be a representation of efficiency. If certain equipment is running, for example a large proportion of the air conditioners, then the assessment may be that the current value is not acceptable and that the scheduling of the job should be delayed until fewer air conditioners are running.

The job scheduling apparatus is the apparatus or functional module within the data centre responsible for allocating jobs to resources. Once the job scheduling apparatus receives a job, the job scheduling apparatus performs a selection process to select the resources to perform the job, and transmits the job to the selected resources.

Optionally, the current value representing the current efficiency of the data centre is obtained from a data centre model. In obtaining a current value representing the current efficiency, a computational model of the data centre may be used which is able to generate a value representing the current efficiency of the data centre based on certain input parameters. Advantageously, the input parameters can be varied when using such a model so that the load includes the job to be performed, and the current value thus represents current efficiency if the job were to be performed. Furthermore, the data centre model may be dynamic so that it can be updated to reflect changes in the data centre, or to improve the accuracy of the values it generates.

When using such a model, the value returned may be suitable for comparison with a threshold in order to assess the acceptability of the current value. Optionally, assessing whether the current value is an acceptable value includes comparing the current value with a threshold value representing a minimum acceptable efficiency of the data centre for performing the job, and the current value is an acceptable value when it exceeds the threshold value. The operation of a comparison with a threshold value provides a simple and definitive way of assessing the acceptability of the value representing current efficiency.

The value representing current efficiency of the data centre may be calculated as a marginal cost, so that the threshold value is a threshold marginal cost or an efficiency threshold based on a threshold marginal cost. Such embodiments include obtaining the current value representing the current efficiency of the data centre using current operating conditions to obtain from a data centre model: a first cost value representing the cost of running the data centre when performing the job; and a second cost value representing the cost of running the data centre without performing the job; and calculating the current value based on the difference between the first cost value and the second cost value. The current value is therefore a marginal cost, and is the difference between the cost of operating the data centre with the job (and all other jobs already running in the data centre), and the cost of operating the data centre without the job. Advantageously, calculating the current value in this way provides an accurate representation of the energy cost of performing the job at a certain time. The novel use of marginal cost values applied to a whole data centre rather than individual equipment within a data centre enables efficiency computations to be made under a wide range of operating conditions.

In comparing the current value representing energy efficiency of the data centre with a threshold value, it may be that the threshold value is defined as a fraction (the fraction being smaller than one) of the best possible efficiency for performing the job. The best possible efficiency may be obtained by simply dividing the job size by a peak efficiency. Alternatively, the best possible efficiency may be obtained by, upon receiving the job to be performed in the data centre, obtaining the difference between the first cost value and the second cost value for a selected range of potential operating conditions and defining a best possible cost as the smallest obtained difference; and calculating the threshold value by defining as a best possible efficiency the efficiency of performing the job with the best possible cost, and multiplying the best possible efficiency by a threshold fraction.

In finding a best possible efficiency, it may be desirable to limit the range of operating conditions which are considered in finding the best value. For example, it may be that constraints to be applied when performing the job are taken into account when selecting the range of potential operating conditions. It may be that there is a time constraint, dictated either by a predetermined value, or by the job having a final time by which it should be performed. Therefore, a submission to a data centre model to find the best possible efficiency could be limited to the best possible efficiency from now to the expiry of the predetermined time period. Alternatively, it may be that certain parameters are fixed or given upper and lower limits in calculating the best possible efficiency, such as temperature. For example, the best possible efficiency may be calculated only for the current temperature, or for temperatures within one or two degrees of the current temperature.

In converting the best possible efficiency to a threshold value by multiplication with a threshold fraction, it may be that the threshold fraction is a fixed value. That is to say, regardless of the job, the threshold fraction could be, for example, 0.75. So, for any job, as long as the current value representing the current efficiency is above 0.75 x the best possible efficiency, the current value is deemed acceptable and the job passed to the job scheduler. We note that the threshold fraction may be expressed as a decimal or a percentage.

Alternatively, each job may contain an indication of the threshold fraction, so that the threshold fraction is defined each time a job is received. This may be in the form of an explicit indication in some data accompanying or being part of the job, alternatively, it may that jobs are categorised according to certain characteristics and each category has its own threshold fraction.

Furthermore, the threshold fraction may be dynamic, so that the longer a job is held in the job scheduling timing apparatus, the smaller the threshold becomes and the easier to satisfy.

Whilst the above discussion of thresholds and best possible values has been in terms of a best possible efficiency and minimum acceptable efficiency threshold, it should be appreciated that embodiments of the invention are therefore implicitly using lowest possible costs as best possible efficiencies and maximum acceptable costs as minimum acceptable efficiencies.

The cost of running a data centre may be calculated not merely in terms of running the IT equipment such as servers and networking equipment, but may include a combination of supporting infrastructure such as air conditioning, other air control measures such as humidity control, power supply, and other energy-consuming equipment. To this end, the efficiency may be calculated as the amount of data processed in performing jobs in relation to the cost of running the IT equipment and supporting infrastructure.

In some embodiments, cost may be directly proportional to energy consumption in the data centre. However, it may be that cost cannot be calculated in such a simple way. The efficiency, which measures the data processed in performing jobs per unit cost, may be an efficiency in terms of data processed in performing jobs per unit energy consumption in the data centre.

Alternatively, when carbon dioxide generation is to be the main cost consideration, efficiency is in terms of data processed in performing jobs per unit carbon dioxide generated by the data centre's use of power.

As a further alternative, when monetary cost is the main cost consideration, efficiency is in terms of data processed in performing jobs per unit monetary cost of energy consumed by the data centre. Such embodiments may use computational models that can be modified according to changes in price of energy, either from day-night or due to longer-term fluctuations in energy cost.

Once considerations of efficiency have been used to define at what time it is acceptable to pass the job to the job scheduler, the method may further comprise upon transmitting the job to the job scheduling apparatus at a time determined to be energy efficient, at the job scheduling apparatus, allocating the job to a resource in the data centre; and performing the job at the resource in the data centre.

In embodiments of another aspect of the present invention, there is provided a job scheduling timing apparatus for determining timing of transmittal of a job to a job scheduler in a data centre, the apparatus comprising: a receiving unit operable to receive a job to be performed in the data centre; a current value obtaining and assessing unit operable to obtain a current value representing the current efficiency of the data centre and to assess whether the current value is an acceptable value for performing the job, and to repeat the obtaining and assessing in turn until the current value is an acceptable value; and a job transmitting unit being operable, when the current value is an acceptable value, to transmit the job to the job scheduler. Furthermore, it may be that there is a period of waiting between an assessment that the current value is not an acceptable value for performing the job and a next iteration of the obtaining and assessing.

In another aspect of embodiments, there is provided a job scheduler including the job scheduling timing apparatus defined above, and a job scheduling apparatus operable to receive the job from the job scheduling timing apparatus, to allocate the job to a resource in the data centre, and to transmit the job to the resource.

In a further alternative aspect of embodiments, there is provided a computer program which, when executed by a computing device, causes the computing device to perform a method embodying the present invention or to function as an apparatus embodying the present invention. The computing device may have storage, a processor, and a network interface unit.

Preferred features of invention embodiments will now be described with reference to the accompanying drawings, in which:
Figure 1 represents a flow of control in an embodiment of the present invention;
Figure 2 is a schematic representation of a job scheduling timing apparatus embodying the present invention;
Figure 3 is a schematic representation of a job scheduling timing apparatus embodying the present invention and configured to operate in an alternative fashion to that of Figure 2;
Figure 4 is a schematic representation of a job scheduler embodying the present invention in relation to external components;
Figure 5 is an alternative representation of a flow of control embodying the present invention.

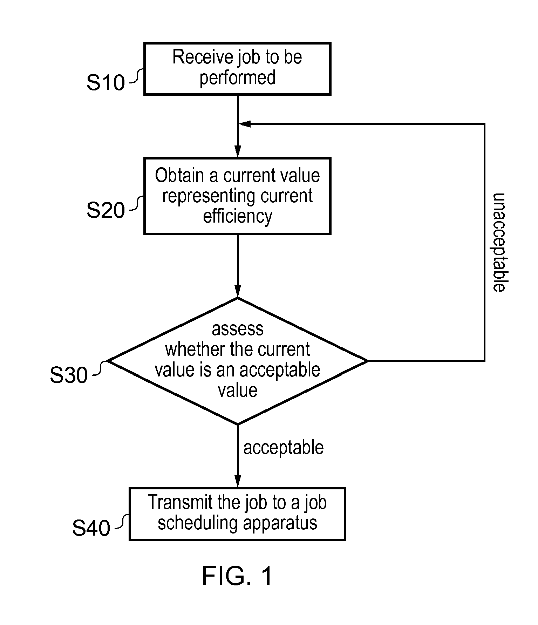

Figure 1 is a flow control representation illustrating the flow of control between steps of an embodiment of the invention. At step S10 a job is received at the data centre. The job may be submitted by a user, or by some global allocation system responsible for allocating jobs to data centres. The job will place some load on the data centre when performed, as there will be some element of the job requiring processing by the resources of the data centre.

At step S20 a current value representing current efficiency of the data centre is obtained. This may be obtained by submitting a collection of parameters characterising performance to a computational model of the data centre to obtain a value representing the efficiency of the data centre. Alternatively, the current value may be obtained based on empirical measurements of recent performance, including some measure of data processed and some measure of energy consumed or cost incurred.

The current value representing current efficiency of the data centre may be based on the marginal cost of execution, calculated using a computation of the energy costs for the whole data centre; the IT equipment and the supporting infrastructure. A marginal cost could be calculated using forecasts based on empirically determined measurements of the current value. The marginal cost may be calculated using a computational cost model of the data centre. Marginal cost is computed by computing the cost of operating the data centre with the job, and by performing a separate computation of the operating cost of the data centre without the job in question, but with other jobs currently already being performed. The marginal cost is the difference between these two values, and the current value maybe the size of the job divided by the marginal cost.

Step S30 is a step of assessing whether the current value is an acceptable value. Where the current value is calculated based on a marginal cost computation, assessing whether the current value is acceptable may involve comparison with a threshold value representing the minimum acceptable efficiency level at which the job should be performed. In alternative embodiments, the current value may be an external temperature, since in some data centres the efficiency will be linked to external temperature so that it is known that at sufficiently high external temperatures the data centre's efficiency will be unacceptably high. Similarly, the current value may be a measure of the internal temperature of the data centre, since high internal temperatures require the operation of more cooling equipment and hence internal temperature is linked to efficiency. It may that the current value is simply an indication of whether certain pieces of equipment are operational or not, since certain pieces of equipment being called into operation, such as an air conditioner, may be deemed to be unacceptable in terms of efficiency.

It may be that the assessment of a particular job times out after a predetermined time or number of assessments and the job is transmitted to the job scheduling apparatus. At such a time, it may be that in relation to assessment of the job, the current value is deemed acceptable regardless of any other criteria such as thresholds.

If the current value is deemed unacceptable, then the flow of control returns to step S20 and a new current value is obtained. There may be a predetermined minimum period of time between successive current values being obtained.

If the current value is deemed acceptable at step 30, then the flow of control proceeds to step S40, at which step the job is transmitted to a job scheduling apparatus. The job scheduling apparatus may be part of the same or different device as the device at which the job to be performed is received.

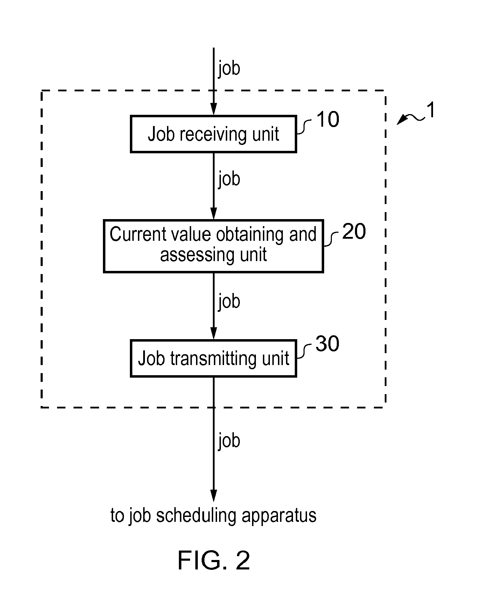

Figure 2 illustrates a job scheduling timing apparatus 1 according to an embodiment of the present invention. The apparatus is a functional module that may be provided as part of a computing device in a data centre, the computer device being connectable via a network to a source of jobs and to a job scheduling apparatus. The job scheduling apparatus may be part of the same computing device as the job scheduling timing apparatus. The computing device can execute programming code which will call on various combinations of its constituent parts, for example, the CPU, storage, memory, and networking interface units, in order to function as the job scheduling timing apparatus according to an embodiment of the present invention. The job scheduling timing apparatus provides a filter or delay mechanism between a job source and a job scheduling apparatus.

The job receiving unit is operable to receive a job. The job will involve some processing load and may carry information sufficient for the processing load to be estimated either at the job receiving unit 10 or the current value obtaining and assessing unit 20.

In the embodiment shown in Figure 2, the job is passed from the job receiving unit to the current value obtaining and assessing unit 20. At the current value obtaining and assessing unit 20 a current value representing current efficiency of the data centre is obtained. The current value may be obtainable using information internal to the unit 20, or it may be that the unit 20 is operable to submit information to an external resource such as a computational cost model of the data centre to obtain the current value. Alternatively, the current value obtaining and assessing unit 20 may submit a request for information to an external device or information store.

The current value obtaining and assessing unit is operable to repeatedly obtain a current value representing current efficiency of the data centre and assess the acceptability of the current value until it is deemed an acceptable value of efficiency for the job to be performed. There may be a period of delay between successive obtaining and assessing iterations in order to control the processing load of the embodiment. The assessment of a current value may be a comparison with a threshold value, the threshold value being either predetermined or defined individually for each job based on information received along with or included in the job.

Once the current value is deemed acceptable, the job is passed from the current value obtaining and assessing unit 20 to the job transmitting unit 30. The job transmitting unit is operable to transmit received jobs to the job scheduling apparatus.

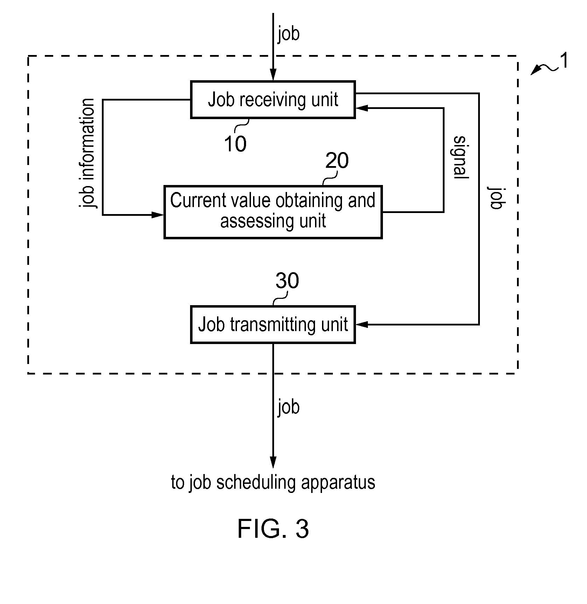

Figure 3 represents an alternative embodiment of the job scheduling timing apparatus 1. As in Figure 2, the job scheduling timing apparatus 1 still comprises a job receiving unit 10, a current value obtaining and assessing unit 20, and a job transmitting unit 30.

In the embodiment of Figure 3, the job receiving unit does not pass the job to the current value obtaining and assessing unit 20, but extracts job information from the job and passes the job information to the current value obtaining and assessing unit 20. For example, information such as processing load, resources required, any constraints such as time constraints, and information relating to the efficiency threshold may be extracted by the job receiving unit 10 and passed to the current value obtaining and assessing unit 20.

On the basis of the received information, the current value obtaining and assessing unit 20 is then operable to obtain a current value representing current efficiency of the data centre in the manner described above. Once the current value is deemed acceptable, the current value obtaining and assessing unit is operable to send a signal to the job receiving unit 10, in response to which signal the job receiving unit 10 is operable to pass the job to the job transmitting unit 30.

As described above, the job transmitting unit 30 is operable, upon receipt of a job, to transmit the received job to a job scheduling apparatus.

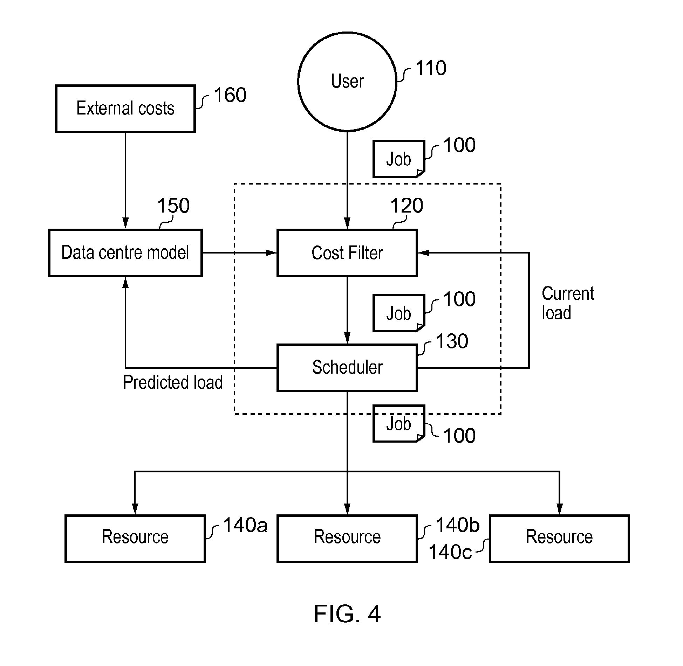

Figure 4 represents an alternative embodiment embodying the present invention. The dashed line surrounds a cost filter 120, which functions as a job scheduling timing apparatus embodying the present invention, and a scheduler 130, which functions a job scheduling apparatus. The cost filter 120 and scheduler 130 together function as a job scheduler embodying the present invention.

The user 110 is external to the data centre. The cost filter 120 and scheduler 130 control allocation and timing of allocation of jobs to resources in the data centre, but may be located apart from the data centre itself. The user has a data connection to the data centre via a network. The cost filter 120 and scheduler 130 are connected via a data connection, and may even be provided as modules or units running on the same computing device.

The cost filter 120 embodying the present invention is such that even if the scheduler 130 is of the type known in the art, the efficiency of the data centre can be improved. The scheduler 130 may be a standard software component installed on a computing device in the data centre, and the cost filter 120 embodying the present invention augments this either as a separate component or as additional capability provided as part of the same job scheduler.

A data centre model 150 is illustrated apart from the cost filter 120 and scheduler 130. In the embodiment pictured, the data centre model 150 is a computational cost model of the data centre and is located on a computing device which may or may not be included in the data centre and which is not included in the job scheduler, either as part of the cost filter 120 or the scheduler 130. The data centre model has a data connection to the cost filter 120, and a separate data connection to the scheduler 130. In alternative embodiments, the data centre model may be provided as part of the job scheduler, or may be provided as a module or unit running on or stored on the same computing device as the cost filter 120 and the scheduler 130.

External costs 160 is a representation of a supply of external cost information to be supplied to the data centre model. The external costs may be input to the data centre model by a user, or they may be stored in one or more locations to be accessed by the data centre model 150. Alternatively, the data centre model 150 may provide information to the cost filter 120 relating to efficiency and energy consumption, and the cost filter 120 can then access external cost information to obtain a cost value or an efficiency value factoring in the external costs.

The resources 140a, 140b, 140c, are resources of the data centre and may be servers each having the same or different operating characteristics and physical characteristics, and may run the same or different software applications.

The job is a task to be performed at the data centre emanating from a user 110. The job 100 is transferrable over a data connection between the user 110 and the cost filter 120, between the cost filter 120 and the scheduler 130, and between the scheduler 130 and the resources 140. For example, the job 100 may be a task to be processed on data centre resources using software hosted by, or accessible by, the data centre resources.

The cost filter 120 is operable to accept a job 100 from a user 110. The cost filter 120 is then operable to hold the job 100 until it has deemed that the efficiency of the data centre is acceptable for the job to be performed. Thus, the cost filter 120 considers cost effectiveness of the data centre in considering the acceptable time to transmit the job to the scheduler 130 for allocation to a resource 140 and execution.

The cost filter 120 may use a computational model of the data centre, the data centre model 150, when deciding whether or not the current efficiency of the data centre is at an acceptable level for the job to be performed. The data centre model 150 can be used to compute marginal costs of executing the job (which can be divided by the job size to obtain efficiency), and to find theoretical local or global maxima in the efficiency of the data centre based on certain defined constraints. The data centre model 150 can use predictions of external costs 160 and information from the scheduler 130 relating to the current and predicted load, to compute execution costs on which to base current values representing the current efficiency of the data centre, and to find best possible costs for use in defining threshold minimum acceptable values of the current value. To this end, upon receipt of a job 100, the cost filter 120 may submit certain pieces of job information to the data centre model 150, such as job size, resource required, and other constraints to be applied. The data centre model can then use the submitted information and external costs 160 to calculate a current value representing current efficiency of the data centre and a best possible value of data centre efficiency. The cost filter 120 can then assess whether the current value is acceptable by multiplying the best possible value by a threshold multiplier to set a threshold minimum acceptable level of efficiency and seeing if the current value exceeds the threshold.

At its most basic level, the data centre model 150 may be a graph of cost per processed data unit against load.

The data centre model 150 may use explicit modelling of the data centre components and their interactions or calibrated equations in order to compute values.

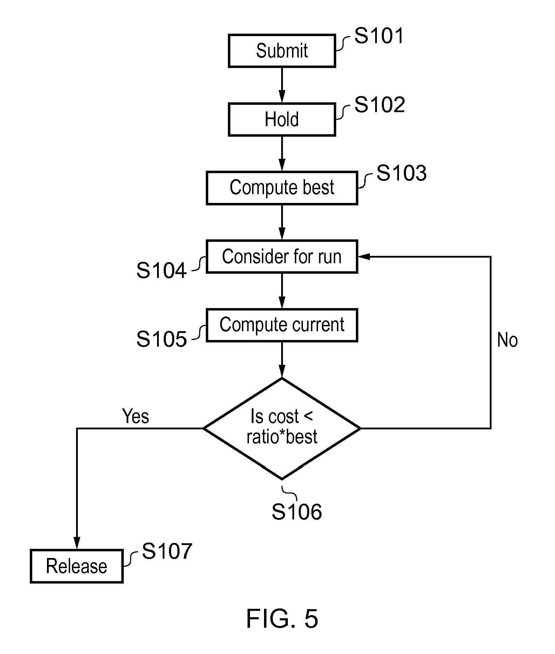

Figure 5 is an alternative presentation of the flow of control illustrated in Figure 1.

In step S101 a job is submitted to the job scheduling timing apparatus.

At step S102 the job is held, or stored, in the job scheduling timing apparatus. The 'held' status is maintained until the flow reaches the release step S107.

At step S103, the best possible marginal cost is computed. This may be performed by the job scheduling timing apparatus in collaboration with a data centre model. The best possible marginal cost represents the smallest possible difference between running the data centre with the job and running the data centre without the job, and will hence occur when the data centre is running at its most efficient. However, certain constraints may be applied, such as a time limit, for example, the job may have to be performed within the next 8 minutes, the constraint may be applied that the best possible marginal cost should be limited by predictions of external factors such as weather over the next 8 minutes, and predictions of load over the next 8 minutes.

At step S104 the job is moved to a state where it can be considered whether or not it should be run. The flow may be held at step S104, for example if there is a minimum amount of time between subsequent repetitions of steps S104 to S106.

At S105 a value of the current marginal cost of running the job is computed. This value is the difference between the cost of running the data centre performing the jobs currently already running, and the cost of running the data centre performing the job and the jobs currently already running. This current marginal cost is a current value representing current efficiency of the data centre.

At step S106 an acceptability condition is applied in which the current marginal cost (cost) is compared with a threshold multiple (ratio) of the best possible cost. In this presentation of an embodiment, costs are used as values representing efficiency, whether it be current or best, which, being inversely proportional to efficiency, reverses the logic in the comparison with the threshold multiple of the best possible cost. In this example, if the current cost of performing the job is lower than the best possible cost multiplied by the threshold multiple (acceptable), then the flow progresses to step S107 and the job is released from its held state and transmitted to a job scheduling apparatus. The threshold multiple is functionally equivalent to the threshold fraction, but should be greater than one.

If, however, it is found at S106 that the current marginal cost is greater than the threshold multiple of the best possible cost, then the flow returns to step S104 for a predetermined period of time until it is once more allowed to continue to step S105. It should be noted that step S106 is not the only way in which a job can be released from its held state, for example, there may a maximum time for which the job can be held before it is transmitted to a job scheduling apparatus regardless of considerations of cost and efficiency. Alternatively, the threshold multiple may be defined for each iteration of step S106, and after a certain amount of time has expired the threshold multiple may increase sufficiently that any theoretical value of current cost would satisfy the acceptability condition of S106.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A method for determining timing of transmittal of a job to a job scheduling apparatus in a data centre, the method comprising:
receiving a job to be performed in the data centre;
obtaining a current value representing the current efficiency of the data centre;
assessing whether the current value is an acceptable value for performing the job;
repeating the obtaining and assessing until the current value is an acceptable value; and
when the current value is an acceptable value, transmitting the job to a job scheduling apparatus.

2. The method according to claim 1, wherein
the current value representing the current efficiency of the data centre is obtained from a data centre model.

3. The method according to any of claim 1 or 2, wherein
assessing whether the current value is an acceptable value includes comparing the current value with a threshold value representing a minimum acceptable efficiency of the data centre for performing the job, and the current value is an acceptable value when it exceeds the threshold value.

4. The method according to claim 3, wherein
obtaining the current value representing the current efficiency of the data centre includes using current operating conditions to obtain from a data centre model:
a first cost value representing the cost of running the data centre when performing the job; and
a second cost value representing the cost of running the data centre without performing the job;
and calculating the current value based on the difference between the first cost value and the second cost value.

5. The method according to claim 4, further comprising:
upon receiving the job to be performed in the data centre, obtaining the difference between the first cost value and the second cost value for a selected range of potential operating conditions and defining a best possible cost as the smallest obtained difference; and
calculating the threshold value by defining as a best possible efficiency the efficiency of performing the job with the best possible cost, and multiplying the best possible efficiency by a threshold fraction.

6. The method according to claim 5, wherein
constraints to be applied when performing the job are taken into account when selecting the range of potential operating conditions.

7. The method according to claim 5 or 6, wherein
the threshold fraction is a fixed value.

8. The method according to claim 5 or 6, wherein
the threshold fraction is defined each time a job is received.

9. The method according to any of the preceding claims, wherein
the data centre includes IT equipment and supporting infrastructure.

10. The method according to any of claims 1 to 9, wherein
efficiency is in terms of data processed in performing jobs per unit carbon dioxide generated by the data centre.

11. The method according to any of claims 1 to 9, wherein
efficiency is in terms of data processed in performing jobs per unit monetary cost of energy consumed by the data centre.

12. The method according to any of the preceding claims, further comprising:
upon transmitting the job to the job scheduling apparatus at a time determined to be energy efficient, at the job scheduling apparatus, allocating the job to a resource in the data centre; and
performing the job at the resource in the data centre.

13. A job scheduling timing apparatus for determining timing of transmittal of a job to a job scheduler in a data centre, the apparatus comprising:
a job receiving unit operable to receive a job to be performed in the data centre;
a current value obtaining and assessing unit operable to obtain a current value representing the current efficiency of the data centre and to assess whether the current value is an acceptable value for performing the job, and to repeat the obtaining and assessing in turn until the current value is an acceptable value; and
a job transmitting unit being operable, when the current value is an acceptable value, to transmit the job to the job scheduler.

14. A job scheduler including the job scheduling timing apparatus according to claim 13, and a job scheduling apparatus operable to receive the job from the job scheduling timing apparatus, to allocate the job to a resource in the data centre, and to transmit the job to the resource.

15. A computer program which, when executed by a computing device, causes the computing device to perform the method according to any of claims 1 to 12, or to function as the apparatus of claim 13 or 14.
